## Europäisches Patentamt
## European Patent Office
## Office européen des brevets

(19)

(11) Numéro de publication: **0 251 861 B1**

(12)
# FASCICULE DE BREVET EUROPEEN

(45) Date de publication de fascicule du brevet:
**11.09.91**

(51) Int. Cl.⁵: **G06F 12/02**, G06F 12/10

(21) Numéro de dépôt: **87401360.0**

(22) Date de dépôt: **17.06.87**

(54) **Unité de gestion de mémoire.**

(30) Priorité: **18.06.86 FR 8608801**

(43) Date de publication de la demande:
**07.01.88 Bulletin 88/01**

(45) Mention de la délivrance du brevet:
**11.09.91 Bulletin 91/37**

(84) Etats contractants désignés:
**DE GB**

(56) Documents cités:
**US-A- 4 356 549**
**US-A- 4 587 610**

**THE 8th ANNUAL SYMPOSIUM ON COMPU-
TER ARCHITECTURE, 12-14 mai 1981, Minneapolis, Minnesota, pages 341-348, sponsored
by the IEEE Computer Society and the Association for computing Machinery, pages
341-348, IEEE Inc., New York, US; M.E. HOU-
DEK et al.: "IBM system/38 support for
capability-based addressing"**

**ELECTRONICS INTERNATIONAL, vol. 53, no.
8, avril 1980, pages 130-134, New York, US;
J.J. ROLOFF: "Managing memory to unloose
the full power of microprocessors"**

(73) Titulaire: **ETAT FRANCAIS représenté par le
Ministre des PTT (Centre National d'Etudes
des Télécommunications)
38-40 rue du Général Leclerc
F-92131 Issy-les-Moulineaux(FR)**

Titulaire: **O'Donnell, Ciaran
30, rue de la Martinière
F-91570 Bièvres(FR)**

(72) Inventeur: **Finger, Ulrich
59 rue de Pansarot
F-91510 Lardy(FR)**
Inventeur: **O'Donnell, Ciaran
30, rue de la Martinière
F-91570 Bièvres(FR)**

(74) Mandataire: **Mongrédien, André et al
c/o BREVATOME 25, rue de Ponthieu
F-75008 Paris(FR)**

Rank Xerox (UK) Business Services

## Description

La présente invention a pour objet une unité de gestion de mémoire pour convertir une adresse logique désignant une cellule d'une mémoire virtuelle en une adresse physique désignant une cellule d'une mémoire réelle.

Depuis longtemps, on sait qu'il est utile d'utiliser un espace d'adressage nettement plus grand que l'espace d'adressage physique, c'est-à-dire la mémoire centrale, dans lequel un programme doit être placé pour être exécuté par le processeur d'un ordinateur.

Historiquement, les mémoires virtuelles ont été d'abord utilisées pour s'affranchir de la contrainte due au coût élevé des mémoires centrales. La mémoire virtuelle apparaissait alors comme une technique pouvant permettre l'utilisation de programmes de taille quelconque dans une configuration physiquement limitée.

Cette contrainte est secondaire aujourd'hui mais d'autres besoins ont conduit à concevoir des systèmes ayant des mémoires virtuelles de plus en plus grandes. De tels besoins se font jour notamment dans le domaine des bases de données, dans lesquelles un adressage direct est souvent souhaité pour assurer une mise en oeuvre efficace de la base. De même, en intelligence artificielle, il est intéressant de recourir à des mémoires virtuelles de très grande capacité, en particulier pour des applications en PROLOG et LISP.

Les mémoires virtuelles requises dans ces applications ont une taille de un ou plusieurs gigaoctets.

Une mémoire virtuelle de très grande taille est également intéressante dans les systèmes où plusieurs processus sont présents simultanément en mémoire centrale, appelés système multitâche, de manière à allouer à chaque processus un espace d'adressage virtuel distinct.

En général, la mémoire virtuelle et la mémoire réelle sont découpées en pages de même taille. Cette taille doit être choisie suffisamment petite pour éviter une fragmentation interne de la mémoire. Une taille de quelques kilo-octets est en général satisfaisante.

Le besoin d'une mémoire virtuelle importante en base de données ou en intelligence artificielle, le désir d'allouer, dans un système multitâche, un espace d'adressage virtuel propre à chaque processus, et la nécessité de limiter la taille d'une page réelle concourent ensemble à augmenter la longueur (nombre de bits) d'une adresse logique, ou adresse de mémoire virtuelle, gérée par l'unité de gestion de mémoire.

Or, si l'espace d'adressage virtuel est très grand, le nombre de pages virtuelles effectivement présentes dans la mémoire réelle est très faible et ces pages sont réparties dans toute la mémoire virtuelle.

De manière classique, la traduction d'une adresse logique en une adresse physique utilise une table de pages accédée par un index égal à la partie haute (numéro de page) de l'adresse logique. Le calcul de cet index peut être fait en un ou plusieurs niveaux. Par exemple, le calcul de l'index dans le circuit MC68851 de Motorola est fait en trois niveaux.

Pour accélérer la traduction, il est connu d'utiliser une mémoire cache de type associative pour mémoriser les pages logiques les plus récemment adressées, et les pages physiques correspondantes. L'emploi d'une mémoire associative présente de nombreux inconvénients : ceci exclut une réalisation sous forme de circuits discrets et nécessite au contraire l'emploi d'un circuit VLSI spécifique ; le coût en surface de la mémoire associative en limite la taille ; et dans le cas d'un système multitâche, le contenu de la mémoire associative est perdu lors des commutations de contexte, ce qui alourdit la gestion de ces derniers.

La correspondance entre une page virtuelle et une page réelle peut être également réalisée, de manière connue, par la technique dite de hash code en terminologie anglo-saxonne et que nous nommerons H-code dans la suite de la description. Cette technique est décrite notamment dans le brevet US-A-4 356 549.

L'unité de gestion de mémoire décrite dans ce brevet comporte une table de pages composée d'une pluralité de cellules de mémorisation, chaque cellule contenant une adresse de mémoire virtuelle, ou adresse logique, et l'adresse de mémoire réelle, ou adresse physique, correspondante. L'adressage de cette table se fait classiquement par un H-code.

L'unité de gestion de mémoire comprend donc un moyen pour calculer un index à partir de la valeur d'une adresse de mémoire virtuelle suivant la fonction prédéterminée de H-code, cet index permettant d'accéder à une cellule de la table de pages. Cette fonction prédéterminée est telle que plusieurs adresses différentes de la mémoire virtuelle peuvent produire le même index. Ces adresses de mémoire virtuelle sont contenues dans des cellules de mémorisation consécutives dont la première est accédée par ledit index.

La traduction d'une adresse logique en une adresse physique consiste alors à calculer un index correspondant à ladite adresse logique, reçue du processeur, et à rechercher, par analyse séquentielle dans les cellules de mémorisation de la table de pages associées à cet index, la cellule de mémorisation contenant une adresse logique égale à l'adresse logique délivrée par le processeur. L'adresse physique recherchée est celle contenue dans ladite cellule de mémorisation.

L'unité de gestion de mémoire décrite dans le brevet cité présente plusieurs inconvénients, notamment en ce qui concerne la vitesse de traduction d'une adresse, la complexité et la taille importante de cette unité de gestion de mémoire.

La vitesse de traduction d'une adresse par cette unité de gestion de mémoire est limitée notamment par le choix d'une recherche séquentielle dans la table des pages. En effet, cette technique nécessite l'utilisation de moyens d'incrémentation de l'index d'accès à la table de pages, ce qui ralentit la recherche. De plus, la table de pages est contenue dans la mémoire centrale, dont le temps d'accès ne peut guère être inférieur à 100 nanosecondes, ce qui limite également la vitesse de traduction d'une adresse logique.

Par ailleurs, l'unité de gestion de mémoire décrite dans le brevet cité comporte un nombre de circuits importants et occupe donc une place non négligeable sur la carte contenant la mémoire centrale. Ceci constitue un inconvénient car on souhaite en général que l'unité de gestion de mémoire occupe le moins de place possible soit pour augmenter la taille de la mémoire centrale, soit pour diminuer les dimensions de la carte supportant la mémoire centrale.

La vitesse de traduction d'une adresse logique peut être accélérée de manière connue par l'utilisation d'une mémoire cache. Mais ceci augmente la surface occupée par l'unité de gestion de mémoire.

L'invention a notamment pour but de permettre une traduction d'une adresse de mémoire virtuelle, ou adresse logique, en une adresse de mémoire réelle, ou adresse physique, plus rapidement que dans le brevet cité même si une mémoire cache était utilisée. L'invention a également pour but une unité de gestion de mémoire simple comportant peu de circuits et utilisable avec des processeurs standards du commerce.

L'unité de gestion de mémoire de l'invention est adaptée aux processeurs supportant la mémoire virtuelle, c'est-à-dire aux processeurs capables de ré-exécuter n'importe quelle instruction après un déroutement causé par une erreur d'accès à la mémoire (en anglais "bus error"), tels que par exemple les microprocesseurs 68020 de Motorola et N532032 de National Semiconductor.

Les buts de l'invention sont atteints par l'utilisation d'une table de pages en deux parties comprenant une première table de pages et une seconde table de pages. La table de pages contient les adresses de toutes les pages physiques de la mémoire réelle, généralement la mémoire centrale.

La première table de pages, implantée dans une mémoire rapide contient une faible fraction de la table de pages. La première table de pages est accédée par un index produit à partir de l'adresse logique à traduire reçue du processeur.

La seconde table de pages, implantée dans une autre mémoire, par exemple la mémoire centrale, contient au moins le reste de la table de pages. Lorsque l'adresse à traduire ne se trouve pas dans la première table de pages, le processeur est dérouté vers un programme de recherche dans la seconde table de pages et de remise à jour de la première table de pages à partir de la seconde table de pages. L'instruction interrompue est alors réexécutée.

On sait que les adresses référencées par un programme, c'est-à-dire les adresses logiques délivrées par le processeur à l'unité de gestion de mémoire, ne sont pas distribuées de manière aléatoire mais sont au contraire concentrées dans un ensemble comprenant un nombre limité de pages, appelé espace de travail (en anglais "working set"). Cet espace de travail évolue de manière indéterminée avec l'exécution d'un programme, mais cette variation est lente.

L'invention consiste donc à utiliser la première table de pages pour traduire les adresses appartenant à l'espace de travail et à prévoir des moyens simples et rapides pour cette traduction.

Lorsqu'une adresse logique reçue ne se trouve pas dans la première table de pages, la traduction est faite par le processeur selon toute technique connue (logiciel, microprogramme) à l'aide de la seconde table de pages. Cette traduction est nettement moins rapide que lorsque la traduction est faite à l'aide de la première table de pages, mais ceci n'est pas un inconvénient car le recours à la seconde table de pages est très rare.

Par exemple, si la première table de pages contient une fraction des pages logiques de l'espace virtuel égal à 1/4096, on peut estimer que la traduction est faite par le processeur à l'aide de la seconde table de pages dans environ 1 cas sur 10000.

De manière précise, l'invention a pour objet une unité de gestion de mémoire pour convertir une adresse logique reçue d'un processeur et désignant une cellule de mémorisation d'une mémoire virtuelle en une adresse physique désignant une cellule de mémorisation d'une mémoire réelle, ladite adresse logique étant composée d'un identificateur de page logique et d'un identificateur de déplacement dans ladite page logique, ladite adresse physique étant composée d'un identificateur de page physique et dudit identificateur de déplacement, l'unité de gestion de mémoire comprenant :

- un moyen d'adressage recevant l'identificateur de page logique et produisant, suivant une première fonction prédéterminée $f_1$, un index ayant une longueur, en nombre de bits, plus faible que la longueur de l'idenficateur de page logique,
- une première table de pages, implantée dans une mémoire rapide, et contenant dans chaque cellule de mémorisation un identificateur de page physique et une clé de validation, ladite première table de pages étant accédée par ledit index, chaque index étant associé à une unique cellule de mémorisation,

- un moyen de validation pour déterminer si l'identificateur de page physique, contenu dans la cellule de mémorisation désignée par l'index produit par le moyen d'adressage, correspond à l'identificateur de page logique, ladite détermination étant effectuée en fonction dudit identificateur de page logique et de ladite clé de validation, ledit moyen de validation délivrant un signal de déroutement audit processeur si l'identificateur de page physique ne correspond pas à l'identificateur de page logique et

- une seconde table de pages, implantée dans une mémoire, et contenant dans chaque cellule de mémorisation un identificateur de page physique et éventuellement une clé de validation, ladite seconde table de pages contenant au moins tous les identificateurs de page physique qui ne sont pas contenus dans la première table de pages, ladite seconde table de pages étant accédée directement par le processeur pour convertir une adresse logique en une adresse physique lorsque le moyen de validation délivre ledit signal de déroutement.

Il convient de noter que l'unité de gestion de mémoire de l'invention n'est pas liée à un processeur particulier, mais peut au contraire être utilisée avec de nombreux processeurs standards du commerce, à la différence des unités de gestion de mémoire connues qui sont souvent spécifiques d'un processeur donné (soit par l'architecture, soit par l'usage d'un microcode) et qui sont en outre souvent figées par rapport à ce processeur en ce qui concerne les tables, formats, protocoles ou autres. Par ailleurs, l'unité de gestion de mémoire de l'invention présente l'avantage d'être adaptable à l'application traitée, même en cours d'exécution de cette application.

De manière avantageuse, l'index est le résultat d'une opération OU-EXCLUSIF entre un premier sous-ensemble de bits et un second sous-ensemble de bits de l'adresse logique.

De manière préférée, la clé de validation a une longueur plus faible que la longueur de l'identificateur de page logique, ladite clé de validation associée à un identificateur de page physique étant égale au résultat par une fonction prédéterminée $f_2$ de l'identificateur de page logique correspondant audit identificateur de page physique.

Selon une caractéristique secondaire, la clé de validation est égale au premier sous-ensemble de bits de l'adresse logique.

De manière préférée, le moyen de validation comprend un moyen de compression pour produire une clé de recherche à partir de l'identificateur de page logique, et un moyen de comparaison de ladite clé de recherche à ladite clé de validation, ledit moyen de comparaison délivrant le signal de déroutement si lesdites clés ne sont pas égales.

Selon une caractéristique de l'invention, dans le cas d'un système multitâche, l'identificateur de page logique comprend une première composante contenant un identificateur de page logique d'une mémoire virtuelle propre à un processus et une seconde composante contenant un identificateur de processus.

De manière préférée, l'unité de gestion de mémoire comprend un registre de processus contenant l'identificateur de processus du processus actif, c'est-à-dire du processus possédant le processeur.

Les caractéristiques et avantages de l'invention ressortiront mieux de la description qui va suivre, donnée à titre illustratif mais non limitatif, en référence aux dessins annexés, sur lesquels :

- la figure 1 représente schématiquement l'unité de gestion de mémoire de l'invention,
- la figure 2 représente un mode de réalisation de l'unité de gestion de mémoire de l'invention,
- la figure 3 représente un mode de réalisation du moyen d'adressage de l'unité de gestion de mémoire de la figure 2,
- la figure 4 représente un format des données contenues dans une cellule de la première table de pages de l'unité de gestion de mémoire de la figure 2,
- la figure 5 représente un format d'une adresse physique délivrée par l'unité de gestion de mémoire de la figure 2,
- la figure 6 représente un organigramme du traitement effectué par le processeur du système lorsque la recherche de l'adresse physique doit être faite dans la seconde table de pages.

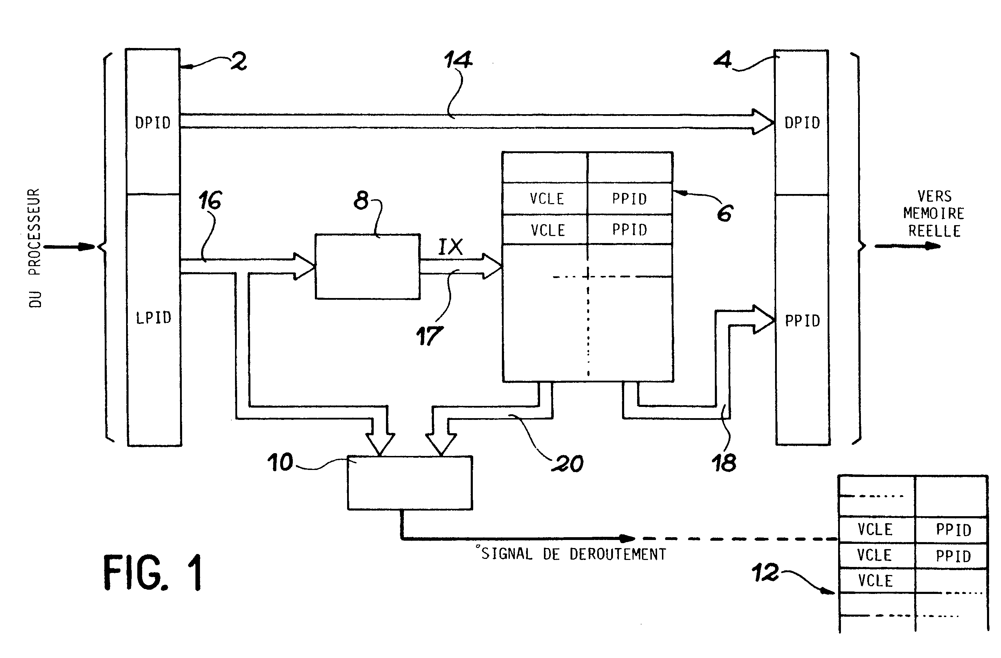

On a représenté schématiquement sur la figure 1 l'unité de gestion de mémoire de l'invention. Celle-ci reçoit d'un processeur une adresse logique dans un registre 2 désignant une cellule de mémorisation d'une mémoire virtuelle et délivre dans un registre 4 une adresse physique désignant une cellule de mémorisation d'une mémoire réelle, par exemple la mémoire centrale d'un système.

L'adresse logique comprend au moins un premier champ pour désigner une page de mémoire virtuelle et un deuxième champ pour désigner un déplacement dans cette page. Le premier champ contient un identificateur de page logique LPID et le deuxième champ un identificateur de déplacement dans la page DPID.

L'unité de gestion de mémoire comprend également :

- une première table de pages 6 dont chaque cellule de mémorisation contient un identificateur de page physique PPID et une clé de validation VCLE,
- un moyen d'adressage 8 produisant un index IX d'accès à la première table de pages en fonction de l'identificateur de page logique LPID reçu,
- un moyen de validation 10 pour déterminer si l'identificateur de page physique PPID contenu dans la cellule de mémorisation désignée par l'index IX correspond à l'identificateur de page logique LPID, ledit moyen de validation émettant un signal de déroutement vers le processeur si l'identificateur de page physique n'est pas l'adresse de page physique cherchée, et
- une seconde table de pages 12 contenant au moins les identificateurs des pages physiques de la mémoire réelle qui ne sont pas contenus dans la première table de pages, et éventuellement des clés de validation associées, cette seconde table étant accédée par le processeur pour trouver l'adresse de la page physique cherchée lorsque le moyen de validation émet le signal de déroutement. Cette seconde table de pages 12 est implantée par exemple dans la mémoire centrale du système.

La première table de pages contient une faible fraction des pages physiques sensiblement égale, et de préférence légèrement supérieure, à l'espace de travail du processeur (en anglais "working set"). Dans le cas d'une mémoire virtuelle très grande, par exemple de plusieurs dizaines de gigaoctets découpée en pages de 4 ko, la première table de pages peut contenir par exemple 4096 adresses de pages.

L'unité de gestion de mémoire de l'invention fonctionne de la manière suivante.

Une adresse logique est inscrite dans le registre 2 par le processeur du système. La partie basse de cette adresse, qui correspond à un déplacement dans la page logique, est transmise directement sur un bus 14 au registre 4 et la partie haut qui correspond à une page logique est traduite par l'unité de gestion de mémoire.

La partie haute de l'adresse logique, qui représente une adresse de page logique, est transmise sur un bus 16 d'une part au moyen d'adressage 8 et d'autre part au moyen de validation 10.

Le moyen d'adressage délivre sur un bus 17 un index IX égal au résultat d'une fonction prédéterminée $f_1$ appliquée à ladite adresse de page logique, ledit index ayant une longueur plus faible, en nombre de bits, que la longueur de l'adresse de page logique. Cette fonction $f_1$ peut être du type H-code et consister par exemple à définir l'index comme étant égal à un sous-ensemble des bits de l'adresse de page logique ou au résultat d'une opération de OU-EXCLUSIF effectuée entre deux sous-ensembles de bits de l'adresse de page logique.

L'index IX réalise l'adressage de la première table de pages 6. L'adresse de page physique contenue dans la cellule de mémorisation d'indice IX est transmise par un bus 18 au registre 4. Elle n'est pas nécessairement celle qui correspond à l'adresse de page logique puisque la fonction $f_1$ est telle que plusieurs adresses de page logique produisent un même index IX.

La vérification est réalisée par le moyen de validation 10 qui compare la clé de validation VCLE, associée à l'adresse de page physique, et reçue de la première table de pages 6 par un bus 20, à une clé de recherche déduite de l'adresse de page logique.

Si l'adresse de page physique transmise au registre 4 est bien l'adresse de page physique cherchée, la conversion d'adresse par l'unité de gestion de mémoire est terminée et le contenu du registre 4 est transmis vers la mémoire réelle.

Dans le cas contraire, le moyen de validation 10 émet un signal de déroutement ("défaut de page") vers le processeur pour que la recherche de l'adresse de page physique se poursuive dans la seconde table de pages 12. Ce signal de déroutement provoque une interruption asynchrone de l'instruction en cours et fait entreprendre au processeur une recherche dans la seconde table de pages sans utiliser le mécanisme de traduction de l'unité de gestion de mémoire.

Dans l'unité de gestion de mémoire de l'invention, un seul accès est fait à la première table de pages pour chaque adresse logique à convertir en adresse physique. On supprime ainsi les moyens annexes d'incrémentation d'index décrit dans le brevet US-A-4356549, ce qui simplifie la réalisation de l'unité de gestion de mémoire et accroit sa rapidité.

Si l'adresse physique cherchée ne se trouve pas dans la première table de pages, la recherche se poursuit dans la seconde table de pages. Dans celle-ci, plusieurs accès, séquentiels ou aléatoires, peuvent être nécessaires pour trouver l'adresse physique cherchée.

Cette recherche dans la seconde table est réalisée par le processeur directement (sans utiliser le mécanisme de traduction d'adresse de l'unité de gestion de mémoire) et peut être faite selon toute méthode connue de l'homme de l'art, soit par logiciel soit par microcode. On peut utiliser par exemple un chaînage pour relier les cellules de mémorisation contenant des identificateurs de page physique dont les identificateurs de page logique correspondants produisent, par la fonction d'adressage $f_1$, un même index IX. Ces cellules de mémorisation peuvent également être disposées séquentiellement comme dans le brevet US-A-4356459 déjà cité. D'autres méthodes sont encore possibles telles que par exemple une recherche fondée sur une arborescence binaire.

Lorsqu'il devient nécessaire d'utiliser la seconde table de pages, l'unité de gestion de mémoire de l'invention ne procure pas toujours de gain en rapidité par rapport à l'art antérieur. En revanche, le gain est important si l'adresse physique cherchée est dans la première table de pages.

Il est donc important que les pages physiques adressées par le processeur se trouvent dans la première table de pages. Différentes stratégies de gestion de cette première table de pages existent et sont connues. Il est possible par exemple de mémoriser dans la première table de pages les identificateurs des pages physiques les plus récemment adressées ou les identificateurs des pages physiques les plus souvent adressées.

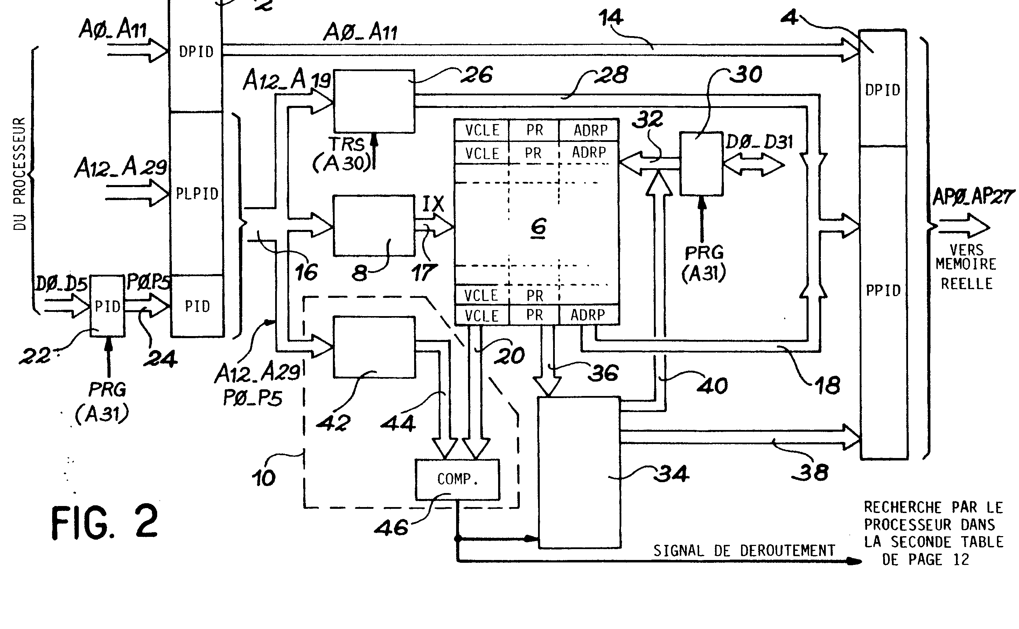

Le fonctionnement général de l'unité de gestion de mémoire de l'invention ayant été précisé, on va maintenant en décrire un mode de réalisation particulier en référence à la figure 2.

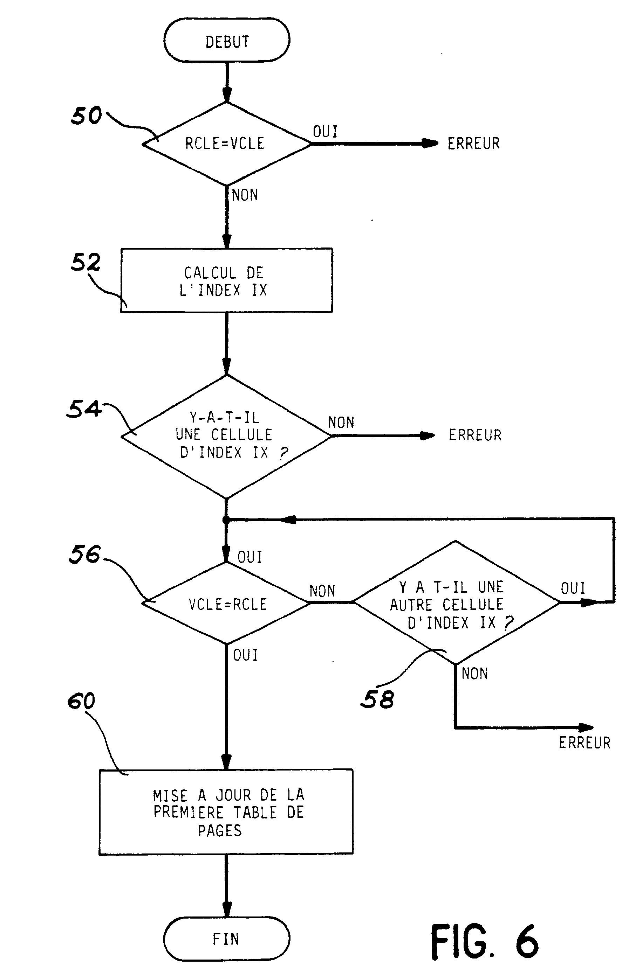

Sur cette figure, les éléments identiques à ceux de la figure 1 portent les mêmes références. Pour simplifier la figure 2, la seconde table de pages 12 n'a pas été représentée. On décrira en référence à la figure 6 la recherche de l'adresse de page physique dans cette seconde table de pages.

Par rapport au dessin schématique de la figure 1, l'unité de gestion de mémoire de la figure 2 a été complétée par les éléments suivants : un registre de processus 22, un verrou 26, un verrou 30 et un moyen 34 de gestion des protections d'accès à une page physique.

Le registre de processus 22 sert à mémoriser le processus actif dans un environnement multitâche. Un identificateur de processus PID est transmis par le processeur sur les bits D0-D5 du bus de données, dans l'exemple choisi. La mémorisation se fait sur sélection du registre 22 au moyen d'un bit de programmation PRG (bit A31 du bus d'adresse). L'identificateur de processus PID est transmis par un bus 24 noté P0-P5 au registre 2. Il forme l'identificateur de page logique avec un identificateur de page logique de processus PLPID défini par les bits d'adresse A12-A29.

Le registre de processus 22 permet notamment de faire simplement une commutation de contexte d'un processus vers un autre processus sans entraîner une reprogrammation lourde de la première table de pages 6.

Le verrou 26 permet de transmettre une adresse logique directement vers le registre 4 sans traduction de cette adresse. Ce verrou reçoit en entrée les bits A12-A19 de l'adresse de page logique et délivre ces bits sur un bus 28, sur réception d'un signal TRS qui peut être le bit d'adresse A30, vers le registre 4.

Il importe que, lors d'un traitement d'interruption dû à un défaut de page, un deuxième défaut de page ne se produise, car alors il y a double erreur, ce qui provoque l'arrêt du processeur.

Or, le traitement d'interruption par le processeur nécessite des accès à la mémoire aussi bien pour la recherche et l'exécution des instructions que pour la sauvegarde et la restauration du contexte.

Si ces accès sont réalisés à travers l'unité de gestion de mémoire, il est possible, en fonction de l'état de la première table de pages, qu'un défaut de page apparaisse.

Le verrou 26 permet, de manière simple, d'éviter ce problème. En effet, il permet au processeur d'accéder de manière transparente à la mémoire, sans dépendre de l'état de la première table de pages, notamment pour le traitement de l'interruption ou lors de tout changement de contexte.

Pour une instruction ayant au moins deux opérandes telles que l'instruction MOVE A, B, il se peut que les adresses logiques correspondant à A et B soient dans des pages logiques différentes, mais que les index produits par le moyen 8 soient identiques.

Or, la première table de pages contient une seule page à chaque index. L'unité de gestion de mémoire ne pourra donc traduire que l'une des deux adresses associées aux deux opérandes et émettra donc nécessairement un signal de déroutement vers le processeur pour indiquer le défaut de page.

L'instruction ne peut donc être éxécutée que s'il est possible de modifier la première table de pages après la traduction de la première adresse. Ceci est possible avec les processeurs pouvant reprendre une instruction au niveau du cycle bus qui a été interrompu.

Le microprocesseur 68020 de Motorola, par exemple, offre cette possibilité. A l'inverse, les processeurs qui reprennent une instruction interrompu à son début, tels que le microprocesseur NS32032 de National Semiconductor, ne peuvent pas exécuter une telle instruction, tout au moins de manière non transparente au processeur. Pour de tels microprocesseurs, la seule solution est de simuler par logiciel l'instruction en cause.

Dans tous les cas, l'unité de gestion de mémoire traduit l'adresse du premier opérande. Cette traduction est d'ailleurs éventuellement faite par le processeur si la page contenant l'adresse du premier opérande n'est pas dans la première table de pages.

De toute façon, après la traduction de l'adresse du premier opérande, la première table de pages contient la page dans laquelle se trouve l'adresse du premier opérande et ne contient donc pas la page dans laquelle se trouve l'adresse du deuxième opérande, lorsque ces pages sont associées à un même index.

Par conséquent, lors de la traduction de l'adresse du deuxième opérande, l'unité de gestion de mémoire délivre le signal de déroutement au processeur, ce qui interrompt l'exécution de l'instruction en cours.

Le processeur réalise alors la traduction de l'adresse du deuxième opérande et remplace dans la première table de pages la page contenant l'adresse du premier opérande par la page contenant l'adresse du deuxième opérande.

Il reprend ensuite l'exécution de l'instruction interrompue au niveau du cycle bus interrompu, c'est-à-dire au niveau de l'adressage de la mémoire à l'adresse correspondant au deuxième opérande.

Le verrou 30 est relié d'une part au bus de données D0-D31 et d'autre part, par un bus 32, à l'entrée de données de la mémoire contenant la première table de pages 6. Ce verrou est commandé par un bit PRG (bit A31 du bus d'adresse) pour la programation de la première table de pages 6.

De manière avantageuse, chaque cellule de mémorisation de la première table de pages 6 comprend une adresse de page physique ADRP, une clé de validation associée VCLE, et en outre une protection PR. Cette dernière contient des bits notant les restrictions d'accès à la page physique (accès superviseur, accès en écriture, ...) et des bits concernant des statistiques d'accès à la page physique (accès en lecture, accès en écriture). On décrira plus en détail le contenu d'une cellule de mémorisation de la première table de pages 6 en référence à la figure 4.

Les bits de protection contenus dans la cellule de mémorisation contenant l'adresse physique cherchée sont transmis à un moyen de traitement 34 par un bus 36. Les bits concernant les statistiques d'accès sont mis à jour et renvoyés dans la première table de pages 6 par un bus 40. D'autres bits transmis par un bus 38 viennent compléter l'adresse de page physique contenue dans le registre 4.

Le moyen de traitement 34 est bloqué lorsque la cellule de mémorisation de la première table de pages 6 ne contient pas l'adresse de page physique cherchée. Ceci est réalisé par le signal d'erreur émis par le moyen de validation 10.

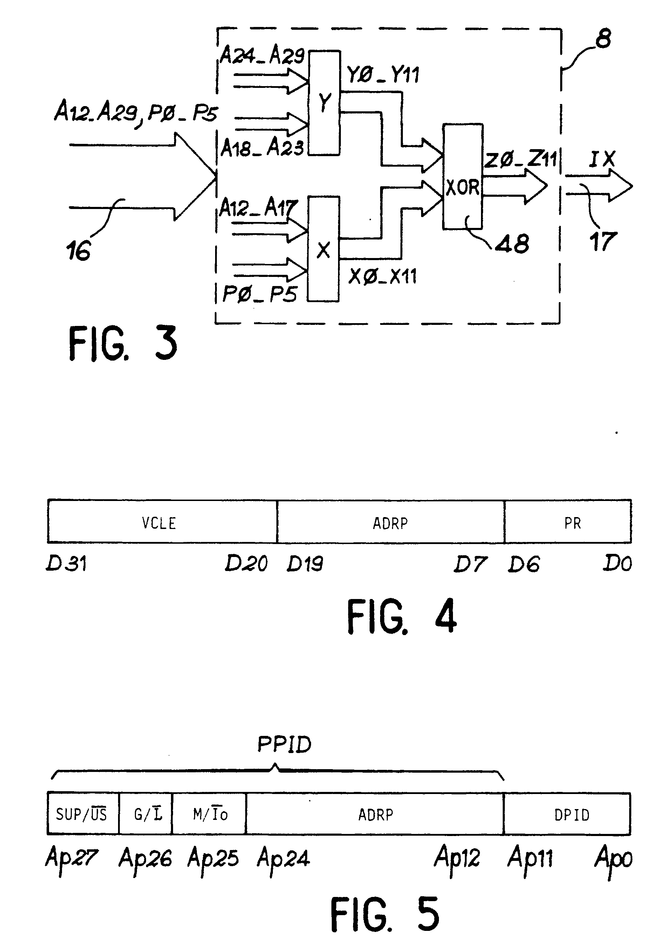

On a représenté sur la figure 3 un mode de réalisation du moyen d'adressage 8.

Il reçoit l'adresse de page logique constituée par les bits d'adresse A12-A29 et par les bits de processus P0-P5. Les bits A12-A17 et P0-P5 sont concaténés pour former une première composante X. De même, les bits A24-A29 et A18-A23 sont concaténés pour former une deuxième composante Y. Ces deux composantes ont chacune 12 bits, numérotés respectivement X0-X11 et Y0-Y11. Les composantes X et Y ont la même longueur dans l'exemple choisi, mais cette condition n'est pas nécessaire.

Ces deux composantes X et Y sont appliquées sur les entrées d'une porte OU-EXCLUSIF 48 réalisant une fonction mathématique $f_1$ pour produire une composante Z dont les bits sont numérotés Z0-Z11. Cette composante Z est l'index IX.

Revenons à la figure 2. Le moyen de validation 10 se compose d'un moyen de compression 42 recevant l'adresse de page logique et délivrant sur un bus 44 une clé de recherche RCLE, et d'un comparateur 46 pour comparer ladite clé de recherche RCLE avec la clé de validation VCLE contenue dans la cellule de mémorisation de la première table de pages 6 indiquée par l'index IX.

Le moyen 42 produit la clé de recherche 42 par une fonction prédéterminée $f_2$ appliquée à l'adresse de page logique. Cette fonction peut être la fonction identité et la clé de recherche RCLE est alors égale à l'adresse de page logique.

Cette solution, qui est utilisée dans le brevet US-A-4356549 déjà cité n'est pas pleinement satisfaisante car elle nécessite une première table de pages 6 de grande taille, puisque la clé de validation VCLE associée à une adresse de page physique ADRP est égale à l'adresse de page logique.

De manière préférée, le moyen 42 réalise une compression de l'adresse de page logique et produit une clé de recherche moins longue (en nombre de bits) que ladite adresse de page logique.

Il faut noter que la fonction $f_2$ ne peut pas être choisie de manière totalement indépendante de la fonction $f_1$ du moyen d'adressage 8 puisque, pour que la traduction d'une adresse de page logique en une adresse de page physique et la vérification de cette traduction soient possibles, il faut que les fonctions $f_1$ et $f_2$ soient telles que l'index IX et la clé de recherche RCLE sont associés à une adresse de page logique unique.

A titre d'exemple, la clé de recherche peut être égale à l'une des composantes X ou Y qui sont combinées pour produire la composante Z égale à l'index IX dans le moyen d'adressage 8 (figure 3).

En effet, supposons par exemple que la fonction $f_2$ consiste à délivrer une clé de recherche RCLE égale à la composante X. Alors, l'index IX égal à X v Y, où v est l'opérateur OU-EXCLUSIF, et la clé de recherche RCLE sont associés à l'adresse de page logique constituée par les composantes RCLE, c'est-à-dire X, et RCLE v IX, c'est-à-dire Xv-

(XvY), soit finalement Y.

On peut noter que si l'on choisit par la fonction $f_2$ la composante X de l'adresse de page logique comme clé de recherche, on peut choisir comme index IX la composante Y. La fonction $f_1$ est alors simplifiée.

On a représenté sur la figure 4 le format d'une donnée contenue dans une cellule de mémorisation de la première table de pages 6, dans le cas où la clé de validation VCLE est plus courte que l'adresse de page logique.

A titre d'exemple, chaque cellule de mémorisation de la première table de pages 6 a une longueur de 32 bits. Les bits D7 à D19 contiennent une adresse de pages physiques ADRP, et les bits D20 à D31 contiennent la clé de validation VCLE associée.

Enfin, les bits D0 à D6 sont utilisés comme protection d'accès ou pour mémoriser les statistiques d'accès à la page physique.

Les bits D0, D1 et D2 peuvent être, par exemple, utilisés comme complément d'adresse physique. D0 peut être utilisé pour indiquer si l'adresse physique se trouve dans l'espace mémoire ou dans l'espace d'entrée-sortie, D1 pour indiquer s'il s'agit d'un espace local ou d'un espace global, et D2 pour indiquer si la page physique se trouve sur la carte contenant le processeur.

Les bits D3 et D4 peuvent être utilisés comme protection d'accès à la mémoire physique, le bit D3 indiquant le mode (superviseur/utilisateur) autorisé pour l'accès à la page physique et le bit D4 indiquant si l'écriture est autorisée dans la page physique.

Enfin, les bits D5 et D6 peuvent être utilisés pour des statistiques d'accès à la page physique, le bit D5 étant positionné à une valeur binaire déterminée lors du premier accès à la page physique, et le bit D6 étant positionné à une valeur binaire déterminée lors du premier accès en écriture à la page physique. Le bit D6 permet ainsi de savoir s'il faut réécrire la page physique sur un autre support en cas de remplacement de cette page dans la mémoire centrale.

Le format de l'adresse physique produit par l'unité de gestion de mémoire de l'invention et contenue dans le registre 4 est représenté sur la figure 5. Une adresse de mémoire réelle comprend 28 bits. Les bits Ap0-Ap11 représentent le déplacement dans la page. Les bits Ap12-Ap24 contiennent l'adresse de page physique mémorisée dans la première table de pages 6. Enfin, les bits Ap25, Ap26 et Ap27 correspondent aux bits de protection D0, D1 et D2 de la composante de protection PR de la première table de page.

Le demandeur a réalisé une unité de gestion de mémoire conforme à la figure 2. La première table de pages 6 est composée de 8 mémoires CY7C168 de CYPRESS ayant chacune une taille de 4096×4bits, le comparateur 44 comprend 2 comparateurs 25LS2521 de AMD, la porte OU-EXCLUSIF 48 (figure 3) est composée de 12 portes 74F86, les registres 2 et 4 sont composés de circuits 74F245, le registre 22 d'un circuit 74LS374, le verrou 26 d'un circuit 74F244 et le moyen 34 d'un PAL 16L8.

On a décrit en référence à la figure 1 le fonctionnement de l'unité de gestion de mémoire de l'invention dans le cas où l'adresse de page physique cherchée se trouve dans la première table de pages. On va maintenant décrire en référence à la figure 6 la recherche de l'adresse de page physique dans la seconde table de pages lorsqu'elle ne se trouve pas dans la première table de pages.

La recherche dans la seconde table de pages est déclenchée lorsque le moyen de validation 10 (figure 1) émet un signal d'erreur indiquant que l'adresse de page physique contenue dans la cellule de mémorisation de la première table de pages désignée par l'index n'est pas l'adresse de page physique cherchée.

Ce signal de déroutement peut être par exemple un signal d'interruption du processeur pour le détourner vers un programme de recherche dans la seconde table de pages. Cette recherche peut être réalisée par logiciel ou par microcode. Un organigramme de cette recherche est représenté sur la figure 6.

La seconde table de pages contient au moins la liste des pages physiques de la mémoire centrale qui ne sont pas contenues dans la première table de pages. Cette seconde table de pages est de préférence résidente en mémoire centrale.

La première étape de la recherche est un test de vérification 50 pour vérifier qu'il n'y a pas eu d'erreur dans le traitement effectué par le moyen de validation. Dans le cas du moyen de validation 10 de la figure 2, le test 50 consiste à comparer la clé de recherche RCLE, qui est recalculée à partir de l'adresse de page logique, à la clé de validation VCLE.

Si les deux clés sont égales, un signal d'erreur est déclenché pour indiquer que le résultat du moyen de validation est erroné et que l'adresse de page physique cherchée est dans la première table de pages.

Dans le cas contraire, la recherche se poursuit par une opération 52 de recalcul de l'index IX suivant la fonction $f_1$ du moyen d'adressage. On cherche ensuite une cellule de mémorisation d'index IX dans la seconde table de pages (test 54).

S'il n'y en a pas, la recherche est terminée et un signal d'erreur est émis. Dans le cas contraire, la clé de validaton VCLE contenue dans la cellule de mémorisation est comparée à la clé de recherche RCLE dans un test 56.

Si les clés ne sont pas égales, on cherche une autre cellule de mémorisation d'index IX dans la seconde table de pages (test 58). Il y a en général plusieurs cellules de mémorisation qui correspondent au même index. En effet, plusieurs adresses de page logique donnent le même index par la fonction $f_1$.

Toute méthode connue de l'homme de l'art peut être utilisée pour rechercher toutes les cellules de mémorisation de la seconde table de pages associées à un index déterminé. Une première solution est de placer ces cellules séquentiellement dans la seconde table de pages et de les adresser successivement par incrémentation d'un indice d'adressage. Cette technique est utilisée dans le brevet US-A-4356459 déjà cité.

Une autre technique utilisable consiste à chaîner entre elles les cellules de mémorisation associées à un même index. Il est également possible de faire une recherche par un arbre binaire.

Si le test 58 est positif, c'est-à-dire si une autre cellule de mémorisation associée à l'index déterminé est trouvée, le test 56 est effectué sur la clé de validation de cette cellule. Si le test 58 est négatif, un signal d'erreur est émis et la recherche est terminée.

L'adresse de page physique est trouvée lorsque la clé de validation VCLE associée est égale à la clé de recherche RCLE. L'opération 60 suivante concerne la mise à jour de la première table de pages. L'adresse de page physique trouvée y est mémorisée et remplace une autre adresse de page physique qui est ramenée dans la seconde table de pages. Cette autre adresse de page physique peut être par exemple la page physique la plus anciennement adressée de la liste des pages physiques contenues dans la première table de pages.

L'instruction qui a été interrompue pour défaut de page peut alors être reprise.

**Revendications**

1. Unité de gestion de mémoire pour convertir une adresse logique reçue d'un processeur supportant une mémoire virtuelle, c'est-à-dire un processeur capable de réexécuter une instruction interrompue, ladite adresse logique désignant une cellule de mémorisation d'une mémoire virtuelle, en une adresse physique désignant une cellule de mémorisation d'une mémoire réelle, ladite adresse logique étant composée d'un identificateur de page logique (LPID) et d'un identificateur de déplacement (DPID) dans ladite page, ladite adresse physique étant composée d'un identificateur de page physique (PPID) et dudit identificateur de déplacement (DPID), lesdites adresses logique et physique étant contenues dans des registres (2, 4), ladite unité de gestion de mémoire comprenant :

- un moyen d'adressage (8) recevant ledit identificateur de page logique et produisant, suivant une première fonction prédéterminée $f_1$, un index (IX) ayant une longueur, en nombre de bits, plus faible que la longueur de l'identificateur de page logique,

- une première table de pages (6), implantée dans une mémoire rapide, et contenant dans chaque cellule de mémorisation un identificateur de page physique (PPID) et une clé de validation (VCLE), ladite première table de pages étant accédée par ledit index (IX), chaque index étant associé à une unique cellule de mémorisation,

ladite unité de gestion de mémoire étant caractérisée en ce qu'elle comprend en outre :

- un moyen de validation (10) pour déterminer si l'identificateur de page physique contenu dans la cellule de mémorisation désignée par l'index correspond à l'identificateur de page logique, ladite détermination étant effectuée en fonction dudit identificateur de page logique et de la clé de validation contenue dans ladite cellule de mémorisation, ledit moyen de validation délivrant un signal de déroutement du processeur si ledit identificateur de page physique ne correspond pas audit identificateur de page logique, et

- une seconde table de pages (12), implantée dans une mémoire, établissant une correspondance entre l'espace virtuel d'adressage et les identificateurs de pages physiques, ladite seconde table de pages étant accédée directement par le processeur sur réception du signal de déroutement pour convertir une adresse logique en une adresse physique.

2. Unité de gestion de mémoire selon la revendication 1, caractérisée en ce que la seconde table de pages (12) contient, dans chaque cellule de mémorisation, un identificateur de page physique (PPID) et une clé de validation (VCLE) associée à l'identificateur de page physique de ladite cellule de mémorisation.

3. Unité de gestion de mémoire selon l'une quelconque des revendications 1 et 2, caractérisée en ce que le moyen d'adressage (8) comprend une porte OU-EXCLUSIF (48) réalisant la fonction $f_1$, ladite porte recevant sur une entrée un sous-ensemble des bits de l'identificateur de page logique et sur une autre entrée un autre sous-ensemble des bits de l'identificateur de page logique, ladite porte délivrant l'index (IX).

4. Unité de gestion de mémoire selon l'une quelconque des revendications 1 et 2, caractérisée en ce que le moyen d'adressage (8) délivre un index (IX) égal à un sous-ensemble des bits de l'identificateur de page logique.

5. Unité de gestion de mémoire selon l'une quelconque des revendications 1 à 4, caractérisée en ce que chaque clé de validation contenue dans une cellule de mémorisation de la première ou de la seconde table de pages a une longueur, en nombre de bits, plus faible que l'identificateur de page logique.

6. Unité de gestion de mémoire selon la revendication 5, caractérisée en ce que chaque clé de validation d'une cellule de mémorisation est égale au résultat par une fonction déterminée $f_2$ de l'identificateur de page logique correspondant à l'identificateur de page physique contenu dans ladite cellule de mémorisation.

7. Unité de gestion de mémoire selon la revendication 3, caractérisée en ce que chaque clé de validation contenue dans une cellule de mémorisation de la première ou de la seconde tables de pages est égale audit sous-ensemble de bits de l'identificateur de page logique correspondant à l'identificateur de page physique contenu dans ladite cellule de mémorisation.

8. Unité de gestion de mémoire selon la revendication 5, caractérisée en ce que chaque clé de validation contenue dans une cellule de mémorisation de la première ou de la seconde table de pages est égale au sous-ensemble des bits de l'identificateur de page logique correspondant à l'identificateur de page physique de ladite cellule de mémorisation qui ne font pas partie de l'index.

9. Unité de gestion de mémoire selon l'une quelconque des revendications 1 à 8, caractérisée en ce que le moyen de validation (10) comprend un moyen de compression (42) pour produire une clé de recherche (RCLE) à partir de l'identificateur de page logique, et un comparateur (44) pour comparer ladite clé de recherche et ladite clé de validation et pour délivrer ledit signal d'erreur si lesdites clés ne sont pas égales.

10. Unité de gestion de mémoire selon l'une quelconque des revendications 1 à 9, caractérisée en ce que l'identificateur de page logique comprend une première composante contenant un identificateur de page logique (PLPID) d'une mémoire virtuelle propre à un processus et une seconde composante contenant un identificateur de processus (PID).

11. Unité de gestion de mémoire selon la revendication 10, caractérisée en ce qu'elle comprend en outre un registre de processus (22) contenant l'identificateur de processus du processus actif et délivrant ledit identificateur de processus au registre (2) contenant l'adresse logique.

12. Unité de gestion de mémoire selon l'une quelconque des revendications 1 à 11, caractérisée en ce qu'elle comprend en outre un verrou (26) recevant en entrée au moins une partie de l'identificateur de page logique pour délivrer, sur réception d'un signal de commande (TRS), ladite partie vers le registre (4) contenant l'adresse physique.

13. Unité de gestion de mémoire selon l'une quelconque des revendications 1 à 12, caractérisée en ce que chaque cellule de mémorisation de la première table de pages et de la seconde table de pages comporte une composante de protection (PR) pour gérer des protections d'accès et des statistiques d'accès à la page physique dont l'identificateur est contenu dans ladite cellule de mémorisation.

**Claims**

1. Memory control unit for converting a logic address received from a processor supporting a virtual memory, i.e. a processor able to re-execute an interrupted instruction, said logic address designating a storage cell of a virtual memory, into a physical address designating a storage cell of real memory, said logic address being formed from a logic page identifier (LPID) and a displacement identifier (DPID) in said page, said physical address being constituted by a physical page identifier (PPID) and said displacement identifier (DPID), said logic and physical addresses being contained in registers (2, 4), whereby the memory control unit comprises an addressing means (8) receiving said logic identifier and producing, as a function a first predetermined function $f_1$, an index (IX) having a length, in number of bits, which is smaller than the length of the logic page identifier; a first table of pages (6) stored in a fast memory and containing in each storage cell a physical page iedndtifier (PPID) and a validation key (VCLE), said first table of pages being accessed by said index (IX), each index being associated with a single storage cell; the memory control unit being characterized in that it also comprises a validation means (10) for determining whether the physical page identifier contained in the storage cell designated by the index corresponds to the logic page identifier, said determination being performed as a function of said logic page identifier and the validation key contained in said storage cell, said validation means supplying a processor rerouting signal if said physical page identifier does not correspond to said logic page identifier; and a second table of pages (12) stored in a memory, establishing a correspondence between the virtual addressing space and the physical page identifiers, said second table of pages being directly access by the processor on receiving the rerouting signal for converting a logic address into a physical address.

2. Memory control unit according to claim 1, characterized in that the second table of pages (12) contains, in each storage cell, a physical page identifier (PPID) and a validation key (VCLE) associated with the physical page identifier of said storage cell.

3. Memory control unit according to either of the claims 1 and 2, characterized in that the addressing means (8) comprises an exclusive-OR gate (48) realizing the function $f_1$, said gate receiving on one input a subset of bits from the logic page identifier and and on another input another subset of bits from the logic page identifier, said gate supplying the index (IX).

4. Memory control unit according to either of the claims 1 and 2, characterized in that the addressing means (8) supplies an index (IX) equal to a subset of bits from the logic-page identifier.

5. Memory control unit according to any one of the claims 1 to 4, characterized in that each validation key contained in the storage cell of the first or second talbe of pages has a length, in number of bits smaller than the logic page identifier.

6. Memory control unit according to claim 5, characterized in that each validation key of a storage cell is equal to the result by a given function $f_2$ of the logic page identifier corresponding to the physical page identifier contained in said storage cell.

7. Memory control unit according to claim 3, characterized in that each validation key contained in a storage cell of the first or second table of pages is equal to said subset of bits of the logic page identifier corresponding to the physical page identifier contained in said storage cell.

8. Memory control unit according to claim 5, characterized in that each validation key contained in a storage cell of the first or second table of pages is equal to the subset of bits from the logic page identifier corresponding to the physical page identifier of said storage cell not forming part of the index.

9. Memory control unit according to any one of the claims 1 to 8, characterized in that the validation means (10) comprises a compression means (42) for producing a search key (RCLE) from the logic page identifier and a comparator (44) for comparing said search key and said validation key and for supplying the error signal if said keys are not equal.

10. Memory control unit according to any one of the claims 1 to 9, characterized in that the logic page identifier comprises a first component containing a logic page identifier (PLPID) of a virtual memory for a single process and a second component containing a process identifier (PID).

11. Memory control unit according to claim 10, characterized in that it also comprises a process register (22) containing the process identifier of the active process and supplying said process identifier to the register (22) containing the logic address.

12. Memory control unit according to any one of the claims 1 to 11, characterized in that it also comprises a lock (26) receiving at the input at least part of the logic page identifier for supplying, on reception of a control signal (TRS), the said part to the register (4) containing the physical address.

13. Memory control unit according to any one of the claims 1 to 12, characterized in that each storage cell of the first table of pages and the second table of pages has a protection component (PR) for controlling the access protections and access statistics to the physical page, whose identifier is contained in said storage cell.

**Patentansprüche**

1. Speicherverwaltungseinheit zum Umwandeln einer logischen Adresse, die von einem Prozessor empfangen wird, der einen virtuellen Speicher unterstützt, d.h. einen Speicher, der in der Lage ist, einen unterbrochenen Befehl erneut auszuführen, welche logische Adresse eine Speicherzelle in einem virtuellen Speicher bezeichnet, in eine physikalische Adresse, die eine Speicherzelle in einem reellen Speicher bezeichnet, wobei die logische Adresse aus einem logischen Seitenidentifizierer (LPID) und einem Verschiebungsidentifizierer (DPID) in der Seite zusammengesetzt ist, die physikalische Adresse aus einem physikalischen Seitenidentifizierer (PPID) und dem Verschiebungsidentifizierer (DPID) zusammengesetzt ist, die logischen und physikalischen Adressen in Registern (2,4) enthalten sind, wobei die Speicherverwaltungseinheit enthält:

eine Adressiereinrichtung (8), die den logischen Seitenidentifizierer aufnimmt und entsprechend einer vorbestimmten ersten Funktion $f_1$ einen Index (9) erzeugt, der eine Länge in Anzahl vin Bits aufweist, die geringer als die Länge des logischen Seitenidentifizierers ist,

eine erste Seitentabelle (6), die in einem Schnellspeicher gespeichert ist und in jeder Speicherzelle einen physikalischen Seitenidentifizierer (PPID) und einen Validierungsschlüssel (VCLE) enthält, wobei die erste Seitentabelle durch den genannten Index (9) zugänglich ist und jeder Index einer einzigen Speicherzelle zugeordnet ist,

wobei die Speicherverwaltungseinheit **dadurch gekennzeichnet** ist, daß sie weiterhin enthält:

eine Validierungseinrichtung (10) zum Ermitteln, ob der physikalische Seitenidentifizierer, der in der durch den Index bezeichneten Speicherzelle enthalten ist, dem logischen Seitenidentifizierer entspricht, wobei sich die Ermittlung in Abhängigkeit von dem logischen Seitenidentifizierer und dem in der genannten Speicherzelle enthaltenen Validierungsschlüssel vollzieht, die Validierungseinrichtung ein Sprungsignal des Prozessors liefert, wenn der physikalische Seitenidentifizierer nicht dem logischen Seitenidentifizierer entspricht, und

eine zweite Seitentabelle (12), die in einem Speicher gespeichert ist, und eine Korrespondenz zwischen dem virtuellen Adressierraum und den physikalischen Seitenidentifizierern einrichtet und die direkt durch den Prozessor auf Empfang des Sprungsignals zugänglich ist, um eine logische Adresse in eine physikalische Adresse umzuwandeln.

2. Speicherverwaltungseinheit nach Anspruch 1, **dadurch gekennzeichnet,** daß die zweite Seitentabelle (12) in jeder Speicherzelle einen physikalischen Seitenidentifizierer (PPID) und einen Validierungsschlüssel (VCLE), der einem physikalischen Seitenidentifizierer der genannten Speicherzelle zugeordnet ist, enthält.

3. Speicherverwaltungseinheit nach einem der Ansprüche 1 und 2, **dadurch gekennzeichnet,** daß die Adressiereinrichtung (8) eine EXCLUSIV-ODER-Schaltung (48) enthält, die die Funktion $f_1$ ausführt, wobei diese Schaltung an einem Eingang eine Untergruppe von Bits des logischen Seitenidentifizierers und an einem anderen Eingang eine andere Untergruppe von Bits des logischen Seitenidentifizierers empfängt und die den Index (9) abgibt.

4. Speicherverwaltungseinheit nach einem der Ansprüche 1 und 2, **dadurch gekennzeichnet,** daß die Adressiereinrichtung (8) einen Index (9) gleich einer Untergruppe von Bits des logischen Seitenidentifizierers abgibt.

5. Speicherverwaltungseinheit nach einem der Ansprüche 1 bis 4, **dadurch gekennzeichnet,** daß jeder Validierungsschlüssel, der in einer Speicherzelle der ersten oder der zweiten Seitentabelle enthalten ist, eine Länge aufweist, die in Anzahl der Bits kleiner ist, als der logische Seitenidentifizierer.

6. Speicherverwaltungseinheit nach Anspruch 5, **dadurch gekennzeichnet,** daß jeder Validierungsschlüssel einer Speicherzelle gleich dem Ergebnis durch eine bestimmte Funktion $f_2$ des logischen Seitenidentifizierers ist, der dem physikalischen Seitenidentifizierer entspricht, der in der genannten Speicherzelle enthalten ist.

7. Speicherverwaltungseinheit nach Anspruch 3, **dadurch gekennzeichnet,** daß jeder Validierungsschlüssel, der in einer Speicherzelle der ersten oder zweiten Seitentabellen enthalten ist, gleich der Untergruppe von Bits des logischen Seitenidentifizierers ist, der dem physikalischen Seitenidentifizierer entspricht, der in der genannten Speicherzelle enthalten ist.

8. Speicherverwaltungseinheit nach Anspruch 5, **dadurch gekennzeichnet,** daß jeder Validierungsschlüssel, der in einer Speicherzelle der ersten oder der zweiten Seitentabelle enthalten ist, gleich der Untergruppe von Bits des logischen Seitenidentifizerers, der dem physikalischen Seitenidentifizier der genannten Speicherzelle entspricht, ist, die keinen Teil des Index bilden.

9. Speicherverwaltungseinheit nach einem der Ansprüche 1 bis 8, **dadurch gekennzeichnet,** daß die Validierungseinrichtung (10) eine Komprimierungseinrichtung (42) enthält, um einen Suchschlüssel (RCLE) aus dem logischen Seitenidentifizier zu erzeugen, und einen Komparator (44) enthält, um den genannten Suchschlüssel und den Validierungsschlüssel miteinander zu vergleichen und das Fehlersignal abzugeben, wenn die beiden Schlüssel nicht gleich sind.

10. Speicherverwaltungseinheit nach einem der Ansprüche 1 bis 9, **dadurch gekennzeichnet,** daß der logische Seitenidentifizier eine erste Komponente enthält, die einen logischen Seitenidentifizier (PLPID) eines virtuellen, für einen Prozeß geeigneten Speichers aufweist, und eine zweite Komponente enthält, die einen Prozeßidentifizier (PID) enthält.

11. Speicherverwaltungseinheit nach Anspruch 10, **dadurch gekennzeichnet,** daß sie weiterhin ein Prozeßregister (22) enthält, das den Prozeßidentifizier des aktiven Prozesses enthält, und den Prozeßidentifizier an das Register (2) abgibt, das die logische Adresse enthält.

12. Speicherverwaltungseinheit nach einem der Ansprüche 1 bis 11, **dadurch gekennzeichnet,** daß sie weiterhin eine Sperre (26) enthält, die als Eingang wenigstens einen Teil des logischen Seitenidentifizierers erhält, um auf Empfang eines Befehlssignals (TRS) den genannten Teil an das Register (4) abzugeben, das die physikalische Adresse enthält.

13. Speicherverwaltungseinheit nach einem der Ansprüche 1 bis 12, **dadurch gekennzeichnet,** daß jede Speicherzelle der ersten Seitentabelle und der zweiten Seitentabelle eine Schutzkomponente (PR) aufweist, um Zugriffsschutz und Zugriffsstatistiken zur physikalischen Seite zu erzeugen, deren Identifizier in der genannten Speicherzelle enthalten ist.

FIG. 1

EP 0 251 861 B1

FIG. 2

SIGNAL DE DEROUTEMENT

RECHERCHE PAR LE
PROCESSEUR DANS
LA SECONDE TABLE
DE PAGE 12

EP 0 251 861 B1

FIG. 3

| VCLE | ADRP | PR |
|---|---|---|

D31 — D20  D19 — D7  D6 — D0

FIG. 4

PPID

| SUP/$\overline{US}$ | G/$\overline{L}$ | M/$\overline{Io}$ | ADRP | DPID |
|---|---|---|---|---|

Ap27  Ap26  Ap25  Ap24 — Ap12  Ap11 — Ap0

FIG. 5

**DEBUT**

**50** — RCLE=VCLE — OUI → ERREUR

NON

**52** — CALCUL DE L'INDEX IX

**54** — Y-A-T-IL UNE CELLULE D'INDEX IX ? — NON → ERREUR

OUI

**56** — VCLE=RCLE — NON → **58** Y A T-IL UNE AUTRE CELLULE D'INDEX IX ? — OUI

OUI

NON → ERREUR

**60** — MISE A JOUR DE LA PREMIERE TABLE DE PAGES

**FIN**

# FIG. 6